# EUROPEAN PATENT APPLICATION

(11) **EP 4 730 874 A1**
(43) Date of publication of application: **22.04.2026**
(21) Application number: 24823727.3
(22) Date of filing: 13.06.2024
(51) Int. Cl.: H04W 52/02, H04W 72/27, H04W 74/04, H04W 76/15, H04W 84/12

(54) **METHOD AND APPARATUS FOR SUPPORTING POWER SAVING MODE IN MULTI-AP OPERATION IN WIRELESS LAN SYSTEM**

(30) Priority: 13.06.2023 US 202363472815 P
(71) Applicant: LG Electronics Inc., Yeongdeungpo-gu Seoul 07336 (KR)
(72) Inventor: KIM, Sang Gook, San Diego, California 92131 (US); KIM, Geonhwan, Seoul 06772 (KR); CHOI, Jinsoo, Seoul 06772 (KR); JANG, Insun, Seoul 06772 (KR)
(74) Representative: Jung, Minkyu
(86) International application number: PCT/KR2024/008132
(87) International publication number: WO 2024/258210

(57) **Abstract**

The present disclosure discloses a method and an apparatus for supporting a power saving mode in a multi-AP operation in a wireless LAN system. A method performed by a first AP in a wireless LAN system, according to one embodiment of the present disclosure, may comprise the steps of: receiving, from a second AP, a polling frame for identifying whether to participate in a multi-AP operation; transmitting, to the second AP, a frame including information indicating participation in the multi-AP operation in response to the polling frame, on the basis of the first AP being configured to maintain an awake state related to a power saving mode in a time interval for the multi-AP operation; receiving, from the second AP, a control frame including information related to initiation of the multi-AP operation; and performing frame exchange that is based on the multi-AP operation, on the basis of the information.

## Description

### [TECHNICAL FIELD]

The present disclosure relates to a method and device for supporting a power saving mode in multi-AP operation in a Wireless Local Area Network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

A technical problem of the present disclosure is to provide a method and device for supporting a power saving mode in a multi-AP operation in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method performed by a first Access Point (AP) in a Wireless Local Area Network (WLAN) system according to an aspect of the present disclosure may comprise: receiving, from a second AP, a polling frame for checking whether to participate in a multi-AP operation; based on the first AP being configured to maintain an awake state related to a power saving mode during a duration for the multi-AP operation, transmitting, to the second AP, a frame including information for indicating participation in the multi-AP operation, in response to the polling frame,; receiving, from the second AP, a control frame including information related to initiation of the multi-AP operation; and performing frame exchange based on the multi-AP operation, based on the information.

A method performed by a first Access Point (AP) in a Wireless Local Area Network (WLAN) system according to an additional aspect of the present disclosure may comprise: transmitting, to a second AP, a target wake time (TWT) request frame for requesting participation in a multi-AP operation; receiving, from the second AP, a TWT response frame for indicating whether the requested participation is granted; and based on the participation being granted and the first AP being configured to maintain an awake state related to a power saving mode during a TWT service period (SP), performing frame exchange based on the multi-AP operation during a TWT service period in which the multi-AP operation is to be performed.

### [Technical Effects]

According to the present disclosure, a method and device for supporting a power saving mode in multi-AP operation in a Wireless Local Area Network (WLAN) system can be provided.

According to the present disclosure, there is an advantage in that technical effects according to multi-AP operation can be obtained even for AP(s) operating in a power saving mode.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 illustrates examples of multi-AP schemes to which the present disclosure may be applied.
FIG. 9 illustrates an example of operations of a first AP performing a multi-AP operation in consideration of a power reduction mode according to an embodiment of the present disclosure.
FIG. 10 illustrates an example of operations of a second AP performing a multi-AP operation in consideration of a power reduction mode according to an embodiment of the present disclosure.
FIG. 11 illustrates another example of operations of a first AP performing a multi-AP operation in consideration of a power reduction mode according to an embodiment of the present disclosure.
FIG. 12 illustrates another example of operations of a second AP performing a multi-AP operation in consideration of a power reduction mode according to an embodiment of the present disclosure.
FIG. 13 illustrates an example of a polling-based scheme according to an embodiment of the present disclosure.
FIG. 14 illustrates another example of a polling-based scheme according to an embodiment of the present disclosure.
FIG. 15 illustrates an example of a TWT-based scheme according to an embodiment of the present disclosure.
FIG. 16 illustrates a detailed example of a multi-AP operation in a TWT-based scheme according to an embodiment of the present disclosure.
FIG. 17 illustrates another detailed example of a multi-AP operation in a TWT-based scheme according to an embodiment of the present disclosure.
FIG. 18 illustrates a pre-coordination-based multi-AP operation method according to an embodiment of the present disclosure.
FIG. 19 illustrates an example in which a multi-AP operation method according to an embodiment of the present disclosure is applied to multi-link.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

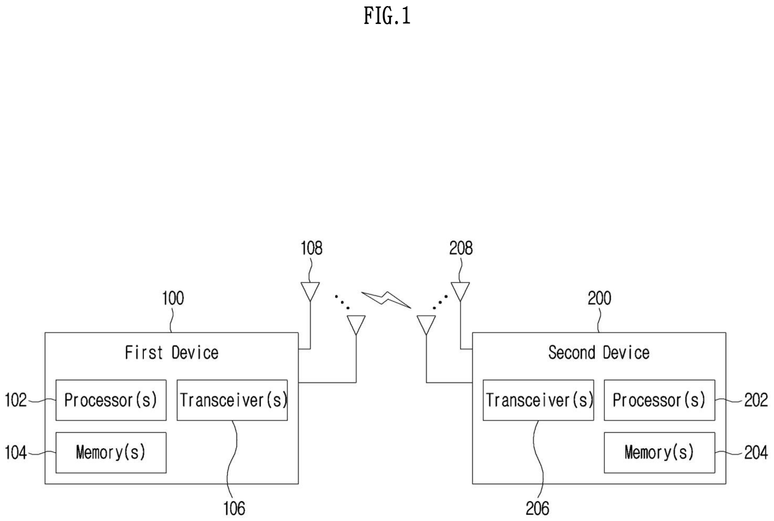

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

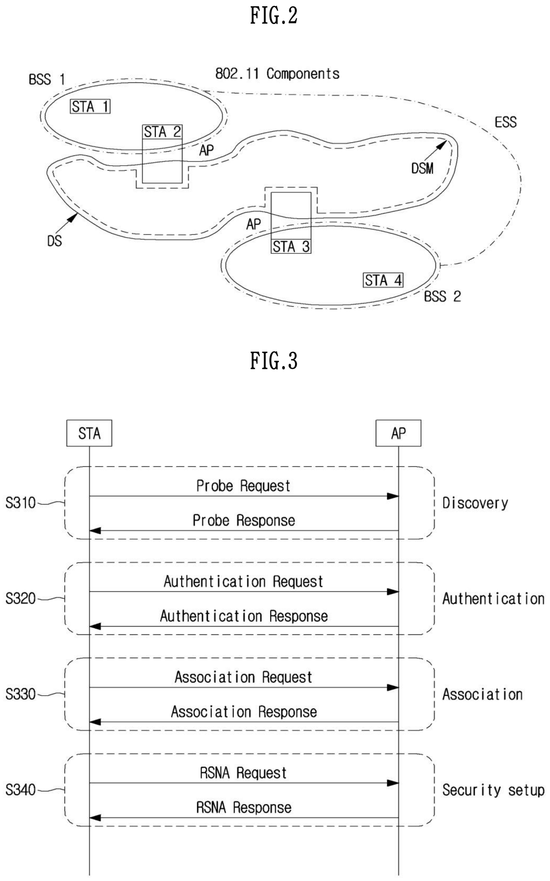

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

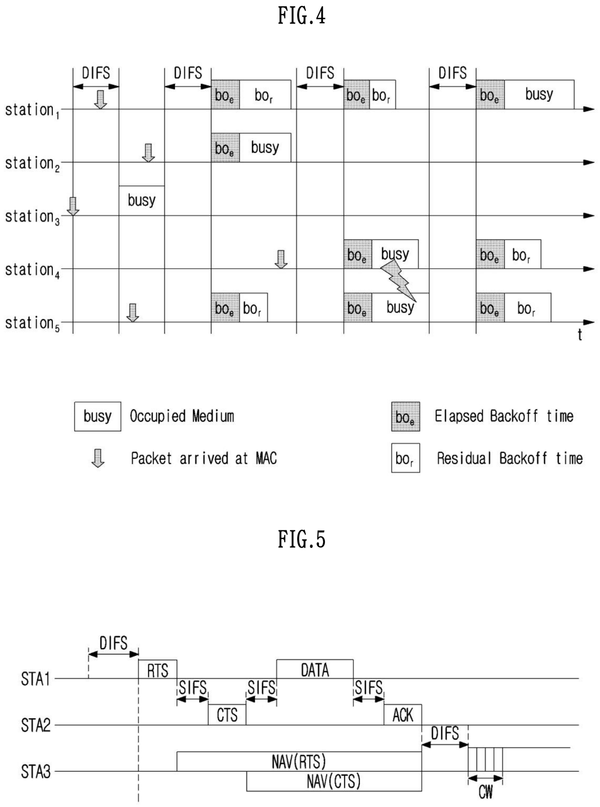

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

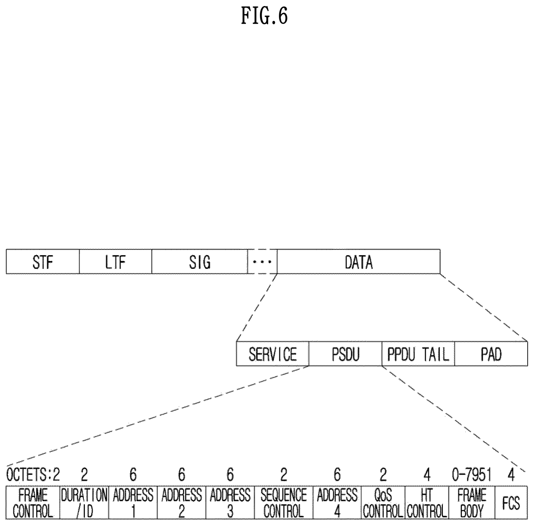

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

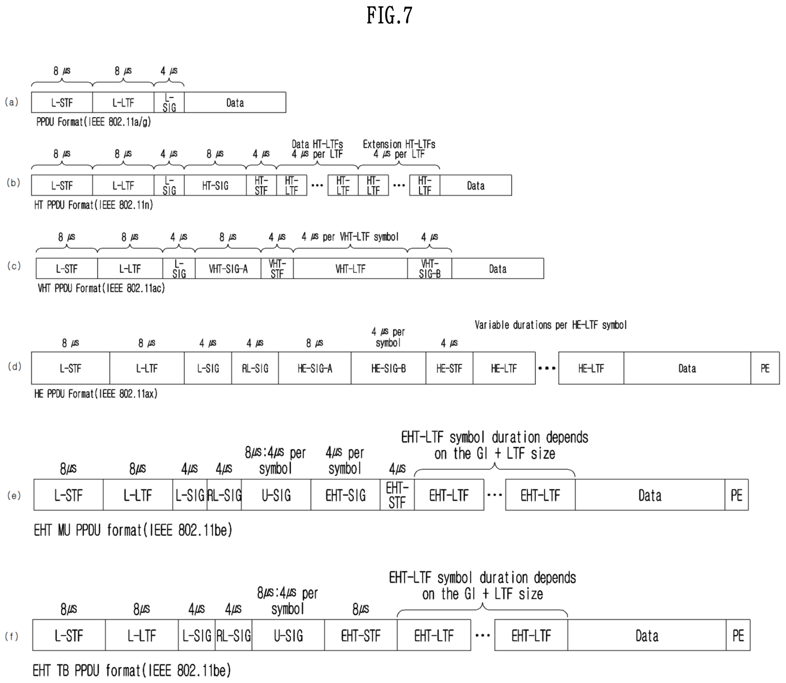

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multi-link operation

Hereinafter, the multi-link (ML) operation supported by the STA according to the present disclosure is described.

The STA (AP STA and/or non-AP STA) described in the present disclosure may support multi-link (ML) communication. The ML communication may mean communication supporting multiple links. The link related to the ML communication may include a channel (e.g., 20/40/80/160/240/320MHz channel) of a frequency band (e.g., 2.4GHz band, 5GHz band, 6GHz band, etc.) in which the STA operates. The multiple links used for the ML communication may be configured in various ways. For example, the multiple links supported for one STA for the ML communication may belong to the same frequency band or may belong to different frequency bands. In addition, each link may correspond to a frequency unit of a predetermined size (e.g., a channel, a subchannel, an RU, etc.). In addition, some or all of the multiple links may be frequency units of the same size or may be frequency units of different sizes.

When one STA supports multiple links, the transmitting and receiving devices supporting each link may operate as one logical STA. That is, an MLD means a device having one or more affiliated STAs as a logical entity and a single MAC service access point (SAP) for one MAC data service and logical link control (LLC). A non-AP MLD means an MLD in which each STA affiliated to the MLD is a non-AP STA. A multi-radio non-AP MLD means a non-AP MLD that supports reception or exchange of frames on more than one link at a time. An AP MLD means an MLD in which each STA affiliated to the MLD is an AP STA.

Multi-link operation (MLO) may enable a non-AP MLD to discover, authenticate, associate, and set up multiple links with an AP MLD. Based on the supported capabilities exchanged during the association procedure, each link may enable channel access and frame exchange between the non-AP MLD and the AP MLD. An STA affiliated to an MLD may select and manage its capabilities and operating parameters independently from other STA(s) affiliated to the same MLD.

Through the multi-link setup process, the AP MLD and/or the non-AP MLD may transmit and receive information related to link(s) that the MLD can support. The link-related information may include one or more of information for whether the MLD supports simultaneous transmit and receive (STR) operation or non-simultaneous transmit and receive (NSTR) operation that cannot support simultaneous transmission and reception on multiple links, information for the number/upper limit of UL/DL links, information for the location/bandwidth/resource of UL/DL links, information for frame types (e.g., management, control, data, etc.) that are available or preferred in at least one UL/DL link, information for an ACK policy that is available or preferred in at least one UL/DL link, or information for a traffic identifier (TID) that is available in at least one UL/DL link.

An AP MLD (e.g., NSTR mobile AP MLD) may configure one of the multiple links as a primary link. The AP MLD may perform beacon frames, probe response frames, and group addressed data frames only on the primary link. The remaining other link(s) of the multiple links may be referred to as non-primary links. An AP MLD operating on a non-primary link may operate not to transmit a beacon frame or a probe response frame. In addition, the non-AP MLD may perform frame exchange during authentication, (re)association, and 4-way handshaking only on the primary link.

A setup link is defined as enabled if at least one traffic identifier (TID) is mapped to the link through a multi-link setup process, and a setup link may be defined as disabled if no TID is mapped to the link. A TID shall always be mapped to at least one setup link unless admission control is used. By default, a TID is mapped to all setup links, so that all setup links may be enabled.

When a link is enabled, the link may be used for frame exchange depending on the power state of the non-AP STA operating on the link. Only MSDUs or A-MSDUs with a TID mapped to the enabled link may be transmitted on the link. Management frames and control frames may only be transmitted on the enabled link.

When a link is disabled, the link may not be used for frame exchange, including management frames for both DL and UL.

During the multi-link setup process, enable/disable of each link may be indicated through TID-to-Link mapping. TID-to-Link mapping may be performed in default mapping mode or/and negotiation mapping mode.

One of the STAs belonging to the MLD may provide information for one or more links other than the link on which it is located, for multi-link discovery (e.g., obtaining information for multiple links including the corresponding link on one link) or multi-link setup (e.g., simultaneously associating on multiple links through exchange of association request/response frames on one link).

### Multi-AP operation mode

Multi-AP operation may correspond to a scheme in which one or more APs transmit and receive information to one or more STAs.

In the case of the conventional single transmission (S-Tx) method, i.e., the method in which a BSS AP transmits to a BSS STA, a problem of reduced performance may occur when the AP performs transmission and reception with users (e.g., STAs) at the cell edge due to interference with adjacent APs.

In contrast, in the case of the multi-AP technique, performance may be improved through methods such as reducing intersymbol interference (ISI) through coordination with neighboring APs or through joint transmission. In other words, in the multi-AP scheme, information is shared between APs and cooperation between APs is possible.

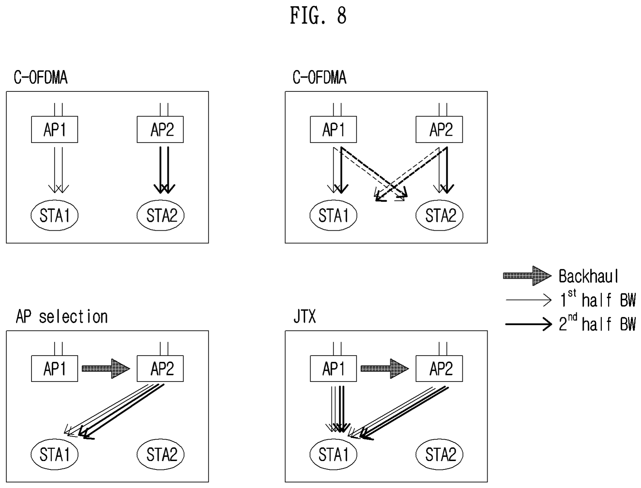

FIG. 8 is a diagram showing examples of multi-AP schemes to which the present disclosure may be applied.

Referring to FIG. 8, as examples of multi-AP schemes, (a) of FIG. 8 illustrates coordinated OFDMA (C-OFDMA), (b) of FIG. 8 illustrates coordinated beamforming (CBF), (c) of FIG. 8 illustrates AP selection, and (d) of FIG. 8 illustrates joint transmission (J-Tx).

For example, as a multi-AP scheme, a coordinated TDMA (C-TDMA) scheme that divides allocation between APs along the time axis, a C-OFDMA scheme that divides along the frequency axis, or a coordinated spatial reuse (C-SR) scheme that utilizes spatial reuse may be considered. As an example, referring to (a) of FIG. 8, resource allocation for AP 1 and STA 1 and resource allocation for AP 2 and STA 2 may be separated in the frequency domain.

Additionally or alternatively, as a multi-AP scheme, a CBF schemeor a coordinated nulling (CN) scheme that nulls interference affecting neighbors and transmits may be considered, and an AP selection scheme that configures/defines an AP with a better channel condition among neighboring APs (i.e., adjacent APs) to perform transmission may also be considered. For example, in the example of (c) of FIG. 8, since AP 2 is determined to have a better channel condition than AP 1, AP 2 may perform transmission to STA 1.

Additionally or alternatively, as a multi-AP scheme, a J-Tx scheme (e.g., joint beamforming, joint MU-MIMO), in which multiple APs cooperate to perform simultaneous transmission or reception, may be considered. The example of (d) of FIG. 8 corresponds to a method in which multiple APs transmit data to STA 1.

In the multi-AP scheme described above, the multi-AP environment may be composed of a master AP, a slave AP, and a STA. In this regard, the master AP may be referred to as a sharing AP, and the slave AP may be referred to as a shared AP.

Here, the master AP may play a role in initiating and controlling a multi-AP operation corresponding to a technology for transmission and reception by multiple APs. Additionally, the master AP may group slave AP(s) and manage a link with the slave AP(s) so that information may be shared between the slave APs. Additionally, the master AP may manage information on a BSS configured by the slave AP(s) and information on STA(s) associated with the corresponding BSS.

By establishing an association with a master AP, a slave AP may share control information, management information, data traffic, etc. with each other. Additionally, a slave AP may basically perform the same function as an AP that may establish a BSS in a conventional wireless LAN system.

As in a conventional wireless LAN system, an STA may construct a BSS by associating with an AP (i.e., a master AP or a slave AP).

In a multi-AP environment as described above, the master AP and the slave AP may be capable of direct transmission and reception between each other. Additionally or alternatively, the master AP and the STA may not be capable of direct transmission and reception between each other. Additionally or alternatively, the slave AP (associated with the STA) and the STA may be capable of direct transmission and reception between each other. Additionally or alternatively, one of the slave APs may be the master AP.

### Multi-AP operation in consideration of a power saving mode of an AP

A multi-AP operation in a wireless LAN system has technical effects such as expansion of coverage, improvement of reliability, and support for low-latency traffic.

Currently, in order to prevent catastrophic situations for humanity caused by climate change such as global warming, interest and efforts to reduce the total amount of carbon dioxide (CO₂ footprint) are rapidly increasing. In this regard, requirements for methods of significantly reducing the contribution to global warming caused by massive power generation and consumption for supporting communication infrastructure have been continuously increasing.

In view of the foregoing, a method of applying/supporting a power saving mode for an AP(s) in the above-described multi-AP operation environment may be needed. As one example, the power saving mode may be applied to one or more APs/STAs in a semi-static or dynamic manner.

In a conventional multi-AP operation scheme, a power saving mode of an AP(s) has not been taken into consideration. In contrast, the present disclosure proposes a method for supporting a multi-AP operation in a state where a power saving mode of an AP(s) is applied. Through this method, the power saving operation of the AP(s) and the multi-AP operation may be combined, and thus technical effects provided by the two operations can be efficiently obtained.

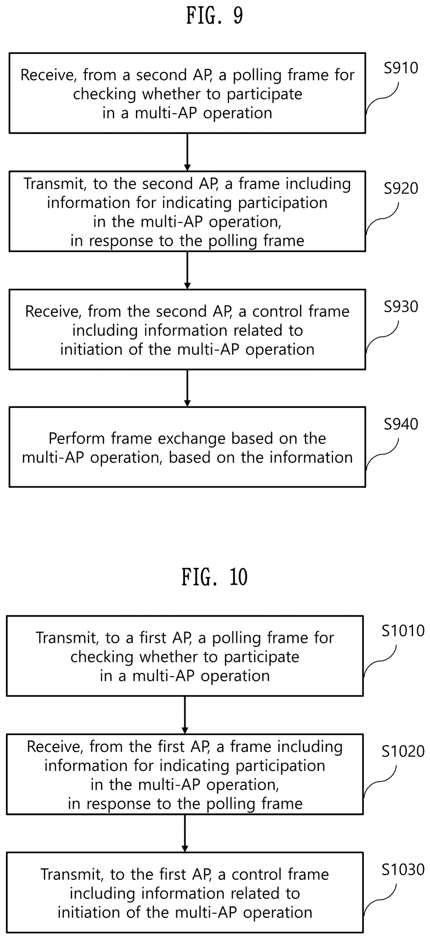

FIGS. 9 and 10 illustrate an example of a method for performing a multi-AP operation in consideration of a power saving mode according to the present disclosure. In FIGS. 9 and 10, with respect to the multi-AP operation, a first AP corresponds to a Coordinated AP, and a second AP may correspond to a Coordinator AP. According to definitions of other technical terms, the first AP corresponds to a Shared AP, and the second AP may correspond to a Sharing AP.

Regarding the multi-AP operation in FIGS. 9 and 10, information for the first AP may be provided to the second AP in advance. For example, the information for the first AP may include one or more of identification information, information related to the power saving operation, or information for a type of multi-AP operation that is supported.

FIG. 9 illustrates an example of operations of a first AP performing a multi-AP operation in consideration of a power saving mode according to an embodiment of the present disclosure.

The first AP may receive a polling frame from the second AP to check whether the first AP participates in the multi-AP operation (S910).

In this regard, a time interval for the multi-AP operation may be included in a transmission opportunity (TXOP) acquired by the second AP. In this case, the first AP may be configured to operate based on a power saving mode within the TXOP or within the time interval for the multi-AP operation. For example, the first AP that is in an awake state related to the power saving mode may operate to receive the polling frame.

If the first AP is configured to maintain an awake state related to the power saving mode in the time interval for the multi-AP operation and desires to participate in the multi-AP operation, the first AP may transmit, to the second AP, a frame (for example, a CTS-to-self frame) including information for indicating participation in the multi-AP operation, in response to the polling frame (S920).

If the first AP is configured to enter a doze state related to the power saving mode before the time interval (duration) for the multi-AP operation, or if the first AP does not desire to participate in the multi-AP operation, the first AP may not transmit a response to the polling frame.

Thereafter, the first AP may receive a control frame including information related to initiation of the multi-AP operation (S930), and may perform frame/data exchange based on the multi-AP operation based on the information (S940).

In this regard, the control frame may include one or more of information for indicating a type of the multi-AP operation or information for resources for the multi-AP operation. For example, when the type of the multi-AP operation is indicated as coordinated-OFDMA (C-OFDMA), the control frame may include information for a resource unit to be used by the first AP in the multi-AP operation. As another example, when the type of the multi-AP operation is indicated as coordinated-TDMA (C-TDMA), the control frame may include information for a transmission order of the first AP and an allocated time interval in the multi-AP operation. As still another example, when the type of the multi-AP operation is indicated as coordinated-SR (C-SR), the control frame may include information for APs capable of simultaneous transmission on the same resource and information for transmission power in the multi-AP operation.

Additionally or alternatively, with respect to the procedure described in FIG. 9, a scheme of performing pre-coordination for the multi-AP operation during a certain time interval may be additionally applied. Here, the certain time interval may be set/indicated periodically or aperiodically. In this regard, during a TXOP including the time interval for the multi-AP operation, an AP participating in the multi-AP operation through pre-coordination may be configured to maintain an awake state related to the power saving mode, and the remaining AP(s) may be configured to be in a doze state related to the power saving mode.

Additionally or alternatively, with respect to the procedure described in FIG. 9, a multi-link operation may also be applied. For example, when the first AP belongs to an AP multi-link device (AP MLD) for the multi-link operation, the first AP may transmit, to a station (STA) belonging to a non-AP MLD that is a target of the frame exchange, information indicating that the frame exchange based on the multi-AP operation is performed based on the multi-link operation.

The method described in the example of FIG. 9 may be performed by the first device 100 of FIG. 1. For example, one or more processors 102 of the first device 100 may be configured to receive a polling frame for checking whether to participate in the multi-AP operation, to transmit a response thereto, to receive a control frame including information related to initiation of the multi-AP operation, and to perform frame/data exchange based on the multi-AP operation on the basis thereof. Furthermore, one or more memories 104 of the first device 100 may store instructions for performing the method described in the example of FIG. 9 or in the examples described later, when executed by the one or more processors 102.

FIG. 10 illustrates an example of operations of a second AP performing a multi-AP operation in consideration of a power saving mode according to an embodiment of the present disclosure.

The second AP may transmit, to the first AP, a polling frame for checking whether to participate in the multi-AP operation (S1010). Thereafter, the second AP may receive, as a response to the polling frame, a frame (e.g., a CTS-to-self frame) including information for indicating participation in the multi-AP operation (S1020).

Thereafter, the first AP may receive a control frame including information related to initiation of the multi-AP operation (S1030). On the basis thereof, frame/data exchange based on the multi-AP operation may be performed/proceeded.

Specific details regarding the polling frame, the response thereto, the control frame, operations/settings related to awake/doze states in a power saving mode, settings/indications related to the multi-AP operation, pre-coordination, and multi-link operation are identical to those described in the example of FIG. 9, and thus redundant descriptions are omitted.

The method described in the example of FIG. 10 may be performed by the second device 200 of FIG. 1. For example, one or more processors 202 of the second device 200 may be configured to transmit a polling frame for checking whether to participate in the multi-AP operation, to receive a response thereto, and to transmit a control frame including information related to initiation of the multi-AP operation. Furthermore, one or more memories 204 of the second device 200 may store instructions for performing the method described in the example of FIG. 10 or in the examples described later, when executed by the one or more processors 202.

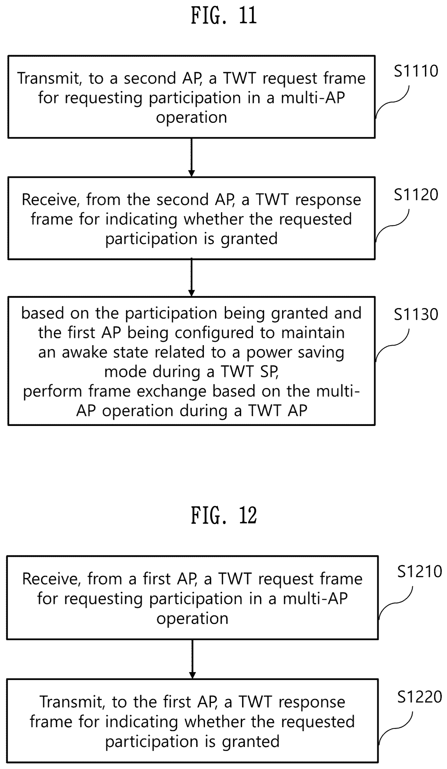

FIGS. 11 and 12 illustrate an example of a method for performing a multi-AP operation in consideration of a power saving mode according to the present disclosure. In FIGS. 11 and 12, with respect to the multi-AP operation, a first AP corresponds to a Coordinated AP, and a second AP may correspond to a Coordinator AP. According to definitions of other technical terms, the first AP corresponds to a Shared AP, and the second AP may correspond to a Sharing AP.

Regarding the multi-AP operation in FIGS. 11 and 12, information for the first AP may be provided to the second AP in advance. For example, the information for the first AP may include one or more of identification information, information related to the power saving operation, or information for a type of multi-AP operation that is supported.

FIG. 11 illustrates another example of operations of a first AP performing a multi-AP operation in consideration of a power saving mode according to an embodiment of the present disclosure.

The first AP may transmit, to the second AP, a target wake time (TWT) request frame for requesting participation in the multi-AP operation (S1110).

For example, the TWT request frame may include information for indicating an intention to participate, and the related information may be configured in the form of an element, a field, and/or a subfield, and may be delivered through the TWT request frame.

The first AP may receive, from the second AP, a TWT response frame for indicating whether the requested participation is granted (S1120).

For example, the TWT response frame may include information indicating a grant state for the participation, and the related information may be configured in the form of an element, a field, and/or a subfield, and may be delivered through the TWT response frame.

If the participation is granted, and if the first AP is configured to maintain an awake state related to the power saving mode in a TWT service period (SP) in which the multi-AP operation is to be performed, the first AP may perform frame/data exchange based on the multi-AP operation during the TWT SP (S1130).

In this regard, frame exchange based on the multi-AP operation may be initiated based on an exchange of trigger frames, polling frames (e.g., PS_Poll, etc.), and response frames (e.g., a block ACK (BA), etc.) between the first AP and the second AP within the TWT SP.

Additionally or alternatively, with respect to the procedure described in FIG. 11, a scheme of performing pre-coordination for the multi-AP operation during a certain time interval may be additionally applied. Here, the certain time interval may be set/indicated periodically or aperiodically. In this regard, during a TXOP including the time interval for the multi-AP operation, an AP participating in the multi-AP operation through pre-coordination may be configured to maintain an awake state related to the power saving mode, and the remaining AP(s) may be configured to be in a doze state related to the power saving mode.

Additionally or alternatively, with respect to the procedure described in FIG. 11, a multi-link operation may also be applied. For example, when the first AP belongs to an AP multi-link device (MLD) for the multi-link operation, the first AP may transmit, to a station (STA) belonging to a non-AP MLD that is a target of the frame exchange, information indicating that the frame exchange based on the multi-AP operation is performed based on the multi-link operation.

The method described in the example of FIG. 11 may be performed by the first device 100 of FIG. 1. For example, one or more processors 102 of the first device 100 may be configured to transmit a TWT request frame for requesting participation in the multi-AP operation, to receive a TWT response frame for indicating whether the requested participation is granted, and, on the basis of the grant state and a state related to the power saving mode, to perform frame/data exchange based on the multi-AP operation during the TWT service period. Furthermore, one or more memories 104 of the first device 100 may store instructions for performing the method described in the example of FIG. 11 or in the examples described later, when executed by the one or more processors 102.

FIG. 12 illustrates another example of operations of a second AP performing a multi-AP operation in consideration of a power saving mode according to an embodiment of the present disclosure.

The second AP may receive, from the first AP, a target wake time (TWT) request frame for requesting participation in the multi-AP operation (S1210).

For example, the TWT request frame may include information for indicating an intention to participate, and the related information may be configured in the form of an element, a field, and/or a subfield, and may be delivered through the TWT request frame.

The second AP may transmit, to the first AP, a TWT response frame for indicating whether the requested participation is granted (S1220).

For example, the TWT response frame may include information indicating a grant state for the participation, and the related information may be configured in the form of an element, a field, and/or a subfield, and may be delivered through the TWT response frame.

If the participation is granted, and if the first AP is configured to maintain an awake state related to the power saving mode in a TWT service period (SP) in which the multi-AP operation is to be performed, frame/data exchange based on the multi-AP operation may be performed during the TWT SP.

Specific details regarding the TWT request frame, the TWT response frame, frame exchange based on the multi-AP operation, operations/settings related to awake/doze states in a power saving mode, pre-coordination, and multi-link operation are identical to those described in the example of FIG. 11, and thus redundant descriptions are omitted.

The method described in the example of FIG. 12 may be performed by the second device 200 of FIG. 1. For example, one or more processors 202 of the second device 200 may be configured to receive a TWT request frame for requesting participation in the multi-AP operation, and to transmit a TWT response frame for indicating whether the requested participation is granted. Furthermore, one or more memories 204 of the second device 200 may store instructions for performing the method described in the example of FIG. 12 or in the examples described later, when executed by the one or more processors 202.

The examples of FIGS. 9 to 12 may correspond to some of various examples of the present disclosure. Hereinafter, various examples of the present disclosure, including the examples of FIGS. 9 to 12, will be described in more detail.

Specifically, various examples will describe methods in which an AP(s) in a power saving state exits the power saving state and performs cooperative operations during a time in which a multi-AP operation is set or scheduled.

In the methods described below, it may be assumed that, during an acquired transmission opportunity (TXOP), a Coordinator AP and one or more Coordinated AP(s) perform a multi-AP operation (e.g., C-OFDMA, C-TDMA, C-SR, etc.).

Here, the Coordinator AP may correspond to an AP that has acquired a TXOP-that is, a time interval in which a multi-AP operation may be included through channel access contention. The Coordinated AP may correspond to an AP that participates in the multi-AP operation during the TXOP acquired by the Coordinator AP. One or more Coordinated APs may exist.

In this regard, at a start time of the TXOP or at a time of the multi-AP operation during the TXOP, the Coordinated AP(s) may be in a power saving mode (i.e., a power saving state mode).

Additionally, the Coordinated AP may know information for the Coordinated AP that will perform the multi-AP operation.

For example, the information may include identification information for the AP (e.g., a MAC address, a BSS ID, a virtual BSS ID, etc.), information related to operations based on the power saving mode, or information for a supported multi-AP operation (e.g., C-OFDMA, C-TDMA, etc.). Here, the information related to operations based on the power saving mode may include whether the power saving mode is operated, a period of the power saving mode, or a time interval related to the power saving mode (e.g., an awake/doze interval).

### Embodiment 1

The present embodiment relates to a scheme of utilizing a polling-based method in order to support a multi-AP operation in consideration of a power saving mode.

A Coordinator AP may transmit, to one or more Coordinated AP(s), a polling frame for checking an intention to participate in the multi-AP operation, at an initiation time of the TXOP or during the TXOP. For example, transmission of the polling frame may be performed to one or more Coordinated AP(s) based on a multicast or broadcast scheme.

The Coordinated AP(s) receiving the polling frame may transmit a response signal to the Coordinator AP, and may thereby deliver their intention to participate. Here, the response signal may correspond to a CTS-to-self frame or another type of response frame.

For example, the Coordinated AP(s) delivering the intention to participate may correspond to Coordinated AP(s) that are awake with respect to the power saving mode (i.e., Coordinated AP(s) in an awake interval/state). That is, only the Coordinated AP(s) that are awake may deliver the intention to participate, and Coordinated AP(s) that are asleep (that is, Coordinated AP(s) in a doze interval/state) and Coordinated AP(s) that are awake but already participating in data transmission may not be able to deliver the intention to participate.

Thereafter, the Coordinator AP may initiate the multi-AP operation for the Coordinated AP(s) that have delivered the intention to participate. In this case, initiation of the multi-AP operation may be performed after receiving the response signal(s) from the Coordinated AP(s) and after a certain time (e.g., SIFS, PIFS, etc.).

For example, the Coordinator AP receiving the intention to participate from the Coordinated AP(s) may identify the AP(s) that will participate in the multi-AP operation, and may determine a type of multi-AP operation that is (commonly) supported for the AP(s). This may be performed based on information for the Coordinated AP (e.g., information for a type of multi-AP operation supported by each Coordinated AP, etc.) that the Coordinator AP already knows (e.g., is previously shared/transferred).

Initiation of the multi-AP operation may start with transmission of a control frame by the Coordinator AP. In this regard, the control frame may include information for indicating a type of the multi-AP operation (e.g., C-OFDMA, C-TDMA, C-SR, etc.) and/or information for related resource utilization.

For example, when C-OFDMA is indicated through the control frame, the control frame may include information for a resource unit (RU) to be used by the Coordinator AP(s). As another example, when C-TDMA is indicated through the control frame, the control frame may include information for a transmission order of each Coordinated AP and a time interval/length. As still another example, when C-SR is indicated through the control frame, the control frame may include indication information for Coordinated AP(s) capable of simultaneous transmission on the same resource (e.g., the same time/frequency resource) and transmission power.

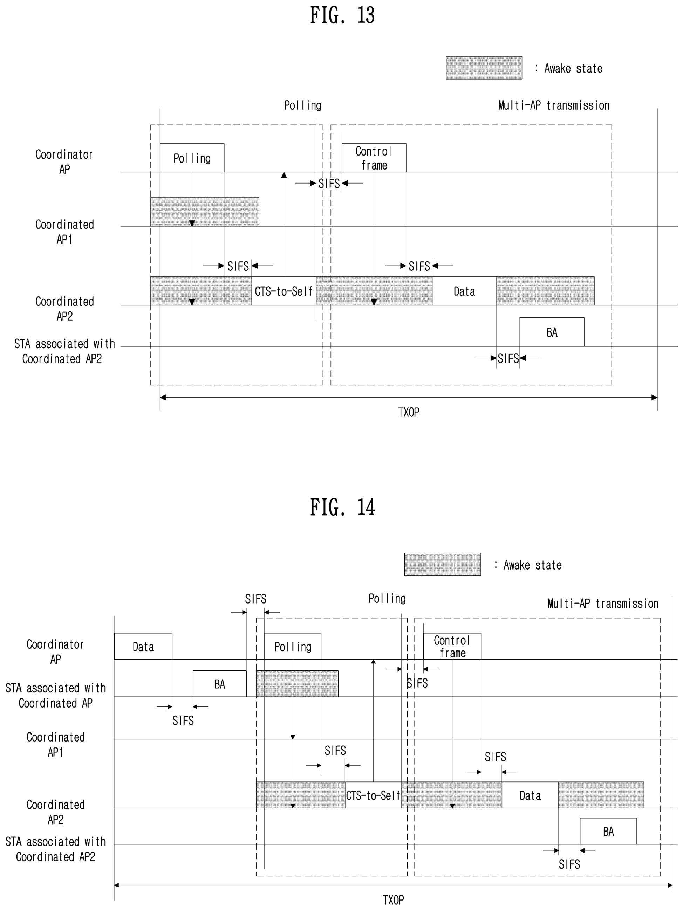

FIG. 13 illustrates an example of a polling-based scheme according to an embodiment of the present disclosure.

Referring to FIG. 13, a case will be described assuming that, with respect to a multi-AP operation within a TXOP acquired by the Coordinator AP, a first Coordinated AP (i.e., Coordinated AP1) and a second Coordinated AP (i.e., Coordinated AP2) are present.

For example, the Coordinator AP may transmit, to the first Coordinated AP and the second Coordinated AP, a polling frame at a start time of the TXOP. Here, the polling frame may be for checking the intention to participate in the multi-AP operation within the TXOP.

After transmission and reception of the polling frame, after a certain time (e.g., SIFS, etc.), the second Coordinated AP may transmit, to the Coordinator AP, a CTS-to-Self frame indicating an intention to participate in the multi-AP operation, as a response to the polling frame. In this regard, the second Coordinated AP that is in an awake state may transmit the response to the polling frame, and the first Coordinated AP that is in a doze state or is in an awake state but is unable to perform the multi-AP operation may not transmit the response to the polling frame.

After transmission and reception of the CTS-to-Self frame, after a certain time (e.g., SIFS, etc.), the Coordinator AP may transmit, to the second Coordinated AP, a control frame for initiating the multi-AP operation.

After transmission and reception of the control frame, after a certain time (e.g., SIFS, etc.), the second Coordinated AP may perform frame exchange with a STA associated with the second Coordinated AP. For example, when a multi-AP operation according to C-TDMA is indicated, the second Coordinated AP may transmit data (e.g., a PPDU, etc.) to the STA associated with the second Coordinated AP within an indicated/allocated time interval, and may receive, from the STA, a response (e.g., a block ACK (BA)).

In relation to the frame exchange between the second Coordinated AP and the STA, a success/failure state of the frame exchange may be considered. In this case, after PPDU transmission by the second Coordinated AP, an operation for determining whether the PPDU transmission is successful may be performed. For example, the success of the frame exchange may be determined through checking whether another operation is performed on the channel during a PIFS duration, checking whether the BA received from the STA is delivered to the Coordinator AP, or checking whether a broadcast BA is received.

FIG. 14 illustrates another example of a polling-based scheme according to an embodiment of the present disclosure.

Referring to FIG. 14, a case will be described assuming that, with respect to a multi-AP operation within a TXOP acquired by the Coordinator AP, a first Coordinated AP (i.e., Coordinated AP1) and a second Coordinated AP (i.e., Coordinated AP2) are present.

For example, the Coordinator AP may perform frame exchange with a STA associated with the Coordinator AP within the TXOP. For example, the Coordinator AP may transmit data (e.g., a PPDU, etc.) to the STA, and may receive, from the STA, a response (e.g., a block ACK (BA)).

After such frame exchange is completed, the Coordinator AP may transmit, to the first Coordinated AP and the second Coordinated AP, a polling frame with respect to the multi-AP operation within the TXOP. That is, at a time after initiation of the TXOP, the Coordinator AP may transmit a polling frame for checking an intention to participate in the multi-AP operation within the TXOP.

Details related to responses after transmission of the polling frame and the multi-AP operation based thereon are identical to those described in FIG. 13, and thus detailed descriptions thereof are omitted in FIG. 14.

### Embodiment 2

The present embodiment relates to a scheme of utilizing a target wake time (TWT)-based method in order to support a multi-AP operation in consideration of a power saving mode.

One or more Coordinated AP(s) may transmit, to the Coordinator AP, a TWT request frame for delivering an intention to participate in the multi-AP operation within the TXOP.

In this case, information for indicating the intention to participate and necessary information related thereto (e.g., information related to the multi-AP operation that is the target of the participation, etc.) may be delivered using an element, a field, and/or a subfield within the TWT request frame.

The Coordinator AP receiving the TWT request frame may transmit, to the Coordinated AP(s), a TWT response frame for delivering whether the requested participation is granted.

In this case, information for indicating grant of participation and necessary information related thereto (e.g., information related to the multi-AP operation that is the target of the participation, etc.) may be delivered using an element, a field, and/or a subfield within the TWT response frame. In this regard, in configuring the TWT response frame, the Coordinator AP may configure the information included in the TWT request frame identically or may configure it with some modification when necessary.

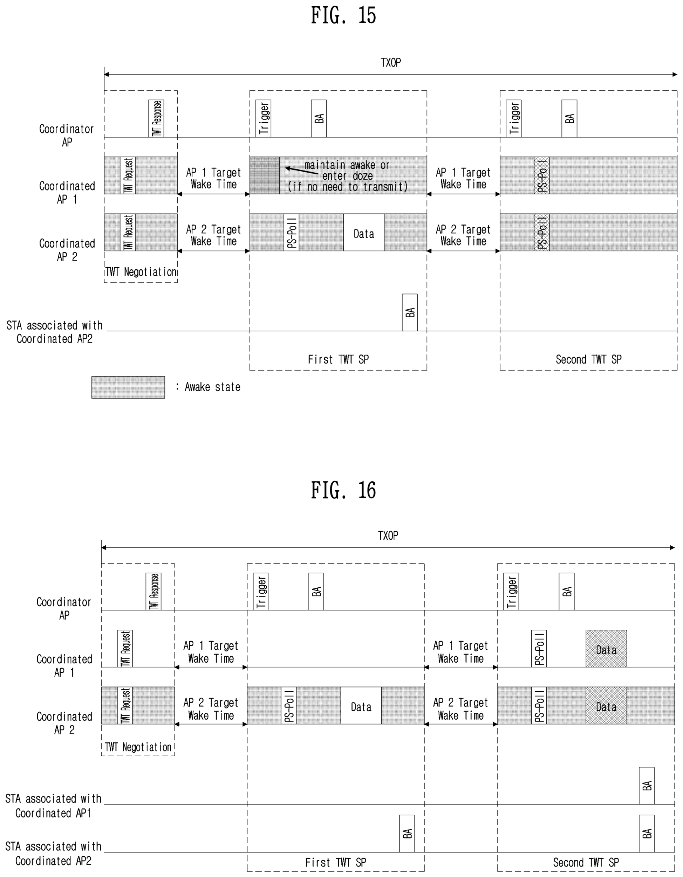

FIG. 15 illustrates an example of a TWT-based scheme according to an embodiment of the present disclosure.

Referring to FIG. 15, a case will be described assuming that, with respect to a multi-AP operation within a TXOP acquired by the Coordinator AP, a first Coordinated AP (i.e., Coordinated AP1) and a second Coordinated AP (i.e., Coordinated AP2) are present.

In this case, the multi-AP operation may be set/defined to be performed within a TWT service period (TWT SP) according to TWT negotiation between the Coordinator AP and the first Coordinated AP and the second Coordinated AP.

For example, within the TXOP acquired by the Coordinator AP, the first Coordinated AP and the second Coordinated AP may transmit, to the Coordinator AP, a TWT request frame for delivering an intention to participate in the multi-AP operation. Thereafter, the Coordinator AP may transmit, to the first Coordinated AP and/or the second Coordinated AP, a TWT response frame for delivering whether the requested participation is granted. Through the TWT negotiation process, the participation request for the multi-AP operation and the grant state thereof may be negotiated/delivered, and the multi-AP operation during the TWT SP may be set/indicated on the basis thereof.

In a first TWT SP illustrated in FIG. 15, the Coordinator AP may transmit a trigger frame to the Coordinated AP(s) for which the multi-AP operation is granted. Here, the trigger frame may be for initiating the multi-AP operation.

Regarding the multi-AP operation in the first TWT SP, a case may be considered in which participation for both the first Coordinated AP and the second Coordinated AP is granted. In this case, the second Coordinated AP that is in an awake state may transmit, as a response to the trigger frame, a PS-Poll frame, and the first Coordinated AP that is in a doze state or is in an awake state but is unable to perform the multi-AP operation may not transmit a response to the trigger frame. In this case, the second Coordinated AP may receive a block ACK (BA) from the Coordinator AP, and may thereafter perform frame exchange with a STA associated with the second Coordinated AP (that is, the multi-AP operation during the first TWT SP).

Alternatively, regarding the multi-AP operation in the first TWT SP, a case may be considered in which only participation for the second Coordinated AP is granted. In this case, the second Coordinated AP that is in an awake state may transmit, as a response to the trigger frame, a PS-Poll frame. In this case, the second Coordinated AP may receive a block ACK (BA) from the Coordinator AP, and may thereafter perform frame exchange with a STA associated with the second Coordinated AP (i.e., the multi-AP operation during the first TWT SP).

Additionally, in a second TWT SP illustrated in FIG. 15, the Coordinator AP may transmit a trigger frame to the Coordinated AP(s) for which the multi-AP operation is granted. Here, the trigger frame may be for initiating the multi-AP operation.

Regarding the multi-AP operation in the second TWT SP, when participation for both the first Coordinated AP and the second Coordinated AP is granted, the first Coordinated AP and the second Coordinated AP that are in an awake state may respectively transmit, as a response to the trigger frame, a PS-Poll frame. In this case, the first Coordinated AP and the second Coordinated AP may receive a block ACK (BA) from the Coordinator AP, and may thereafter perform the negotiated multi-AP operation.

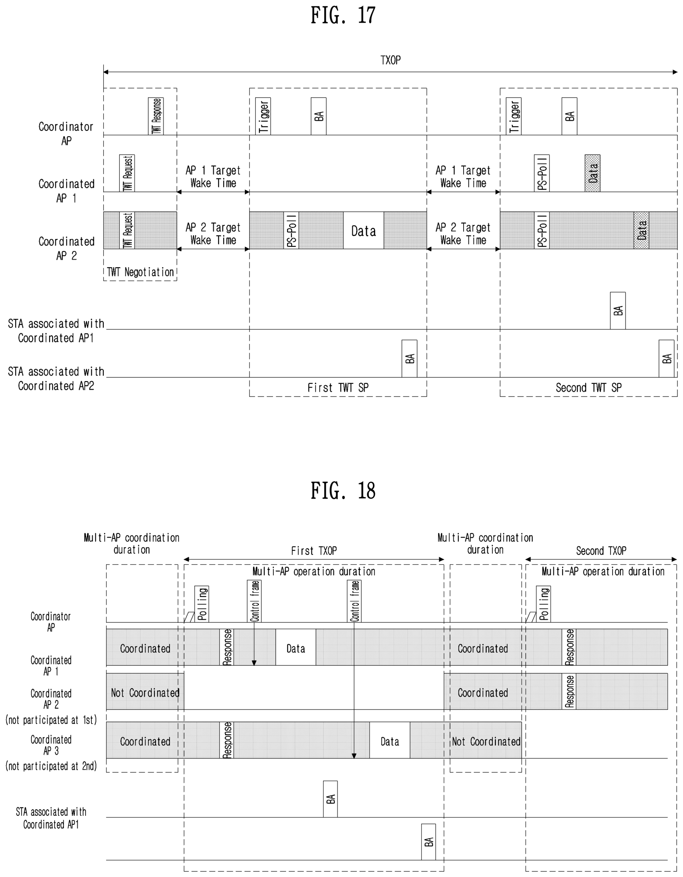

For example, according to a type of the negotiated multi-AP operation in the second TWT SP, procedures illustrated in FIG. 16 and FIG. 17 may be performed.

FIG. 16 illustrates a specific example of a multi-AP operation in a TWT-based scheme according to an embodiment of the present disclosure, and FIG. 17 illustrates another specific example of a multi-AP operation in a TWT-based scheme according to an embodiment of the present disclosure.

Referring to FIG. 16, when the negotiated multi-AP operation is C-OFDMA, the first Coordinated AP and the second Coordinated AP receiving the BA from the Coordinator AP may transmit data on different frequency resources. For example, on the same time resource and on different frequency resources, the first Coordinated AP and the second Coordinated AP may respectively transmit data to their associated STAs, and may receive, as a response, a block ACK (BA) on a predetermined resource. Simultaneous data transmission by the two APs may also be applicable in the case of C-SR.

Referring to FIG. 17, when the negotiated multi-AP operation is C-TDMA, the first Coordinated AP and the second Coordinated AP receiving the BA from the Coordinator AP may perform frame exchange with their respective STAs in different time intervals. In this case, information for the time interval in which the frame exchange is to be performed may be delivered/set/indicated through the TWT negotiation process and/or through exchange of a trigger frame and a PS-Poll frame within the TWT SP. For example, after receiving the BA from the Coordinator AP in the second TWT SP, the first Coordinated AP may perform frame exchange with a STA associated with the first Coordinated AP. After completion of the frame exchange, the second Coordinated AP may perform frame exchange with a STA associated with the second Coordinated AP.

### Embodiment 3

The present embodiment relates to a scheme for supporting/performing pre-coordination in relation to the multi-AP operation according to the present disclosure.

The pre-coordination described below may be applied to the polling-based method according to Embodiment 1 and/or the TWT-based method according to Embodiment 2 of the present disclosure.

For example, the Coordinator AP and the Coordinated AP(s) may share information for a time interval for pre-coordination. The time interval may be set/determined periodically or aperiodically. In this case, the time interval may be referred to as a multi-AP coordination period, a multi-AP setup period, and the like.

In this regard, the Coordinated AP(s) that have expressed/delivered an intention to participate in the multi-AP operation through pre-coordination may maintain an awake state during the TXOP in which cooperation, that is, the multi-AP operation, is to be performed. In this case, the remaining Coordinated AP(s) may be in a doze state.

For example, additional power saving operations may be supported during the TXOP. As a specific example, in the case of C-TDMA, the Coordinated AP(s) that do not participate in transmission may enter a power saving mode (e.g., enter a doze state) until their transmission time.

In this case, at a start time of the TXOP or during the TXOP, the Coordinated AP may perform a polling procedure for the Coordinated AP(s) that have expressed/delivered the intention to participate in the multi-AP operation through pre-coordination.

FIG. 18 illustrates a pre-coordination-based multi-AP operation method according to an embodiment of the present disclosure.

Referring to FIG. 18, a case will be described assuming that, with respect to a multi-AP operation within a TXOP acquired by the Coordinator AP, a first Coordinated AP (i.e., Coordinated AP1), a second Coordinated AP (i.e., Coordinated AP2), and a third Coordinated AP (i.e., Coordinated AP3) are present.

Pre-coordination for the multi-AP operation may be performed in a multi-AP coordination period prior to each TXOP. Alternatively, pre-coordination for multiple TXOPs may be performed in a single multi-AP coordination period.

For example, the first Coordinated AP and the third Coordinated AP may be pre-coordinated to participate in the multi-AP operation in a first TXOP. In this case, the first Coordinated AP and the third Coordinated AP may maintain an awake state in the first TXOP, and the second Coordinated AP may transition to a doze state in the first TXOP. On this basis, the first Coordinated AP and the third Coordinated AP may respectively perform frame exchange with STAs associated with them based on the multi-AP operation.

Additionally, the first Coordinated AP and the second Coordinated AP may be pre-coordinated to participate in the multi-AP operation in a second TXOP. In this case, the first Coordinated AP and the second Coordinated AP may maintain an awake state in the second TXOP, and the third Coordinated AP may transition to a doze state in the second TXOP.

### Embodiment 4

The present embodiment relates to a scheme for extending and applying/supporting the method proposed in the present disclosure (e.g., the methods proposed in Embodiments 1 to 3) to a multi-link operation (MLO).

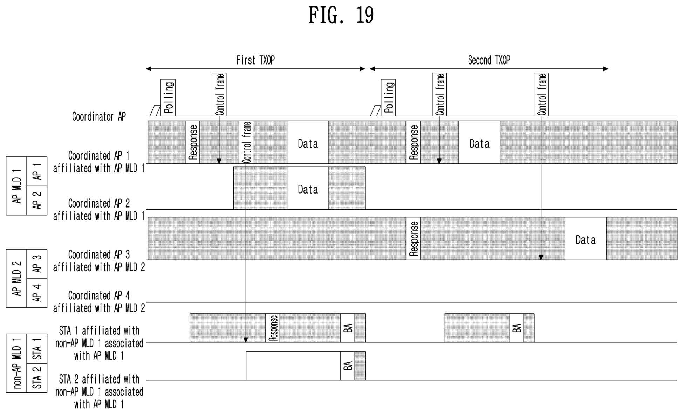

FIG. 19 illustrates an example in which a multi-AP operation method according to an embodiment of the present disclosure is applied to multi-link.

Referring to FIG. 19, a case will be described assuming that a first Coordinated AP (i.e., Coordinated AP1) and a second Coordinated AP (i.e., Coordinated AP2) are set/configured as a first AP MLD (i.e., AP MLD 1), and a third Coordinated AP (i.e., Coordinated AP3) and a fourth Coordinated AP (i.e., Coordinated AP4) are set/configured as a second AP MLD (i.e., AP MLD 2).

In this regard, an AP MLD may be composed of a plurality of APs supporting different links. For example, in the case of the first AP MLD, the first Coordinated AP may support a link on the 2.4 GHz band, and the second Coordinated AP may support a link on the 5 GHz band.

For example, a multi-AP operation between the AP MLD and a non-AP MLD performed during a first TXOP acquired by the Coordinator AP may be as follows.

The Coordinator AP may transmit a polling frame for checking an intention to participate in the multi-AP operation (e.g., the polling frame described in Embodiment 1).

A first Coordinated AP belonging to the first AP MLD may transmit, to the Coordinator AP, a response to the polling frame, that is, information for indicating an intention to participate in the multi-AP operation. In this case, the first Coordinated AP may be in an awake state, and the second Coordinated AP that is in a doze state may not transmit the response. Alternatively, regardless of whether the second Coordinated AP is in an awake state or a doze state, the response may be set/defined to be transmitted only by the first Coordinated AP related to the primary link.

The Coordinator AP receiving the response may transmit, to the first Coordinated AP, a control frame for initiating the multi-AP operation.

For example, the control frame may include information for indicating that the multi-AP operation is to be performed based on the multi-link operation. That is, even when the control frame is transmitted to one AP belonging to the first AP MLD, the initiated multi-AP operation may be indicated to be performed based on the APs belonging to the first AP MLD.

The first Coordinated AP receiving the control frame from the Coordinator AP may transmit, to a first STA belonging to a non-AP MLD associated with the first AP MLD, a control frame for initiating frame exchange. Here, the control frame may include information indicating that frame exchange operations will be performed by the first Coordinated AP and the second Coordinated AP belonging to the first AP MLD.

Thereafter, the first STA may transmit a response frame to the first Coordinated AP, and frame exchange according to the multi-AP operation between the non-AP MLD associated with the first AP MLD and the first AP MLD may be performed based on the multi-link operation.

For example, a multi-AP operation between the AP MLD and the non-AP MLD performed during a second TXOP acquired by the Coordinator AP may be as follows.

The Coordinator AP may transmit a polling frame for checking an intention to participate in the multi-AP operation (e.g., the polling frame described in Embodiment 1).

In this case, with respect to the polling frame, the Coordinated AP that is in an awake state may transmit a response frame to the Coordinator AP. For example, among the two Coordinated APs belonging to the first AP MLD, the first Coordinated AP that is in an awake state may transmit the response frame. In addition, among the two Coordinated APs belonging to the second AP MLD, the third Coordinated AP that is in an awake state may transmit the response frame.

Thereafter, the Coordinator AP may transmit, to the Coordinated AP(s) that have transmitted the above-described response frame, a control frame for initiating the multi-AP operation.

In this regard, the Coordinator AP may initiate the multi-AP operation on an AP MLD basis. For example, the Coordinator AP may first transmit a control frame to the first Coordinated AP belonging to the first AP MLD to initiate the multi-AP operation (e.g., frame exchange between the first AP MLD and the non-AP MLD associated with it). After the multi-AP operation is completed, the Coordinator AP may transmit a control frame to the third Coordinated AP belonging to the second AP MLD to initiate the multi-AP operation (e.g., frame exchange between the second AP MLD and the non-AP MLD associated with it).

In a conventional multi-AP operation in a wireless LAN system, a power saving mode of an AP has not been considered. In contrast, the multi-AP operation proposed in the present disclosure may be supported in consideration of the power saving mode of the AP(s), that is, the Coordinated AP(s), participating in the multi-AP operation. Through this, advantages can be achieved in that technical effects according to the multi-AP operation and technical effects according to the power saving mode can be simultaneously obtained.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first Access Point (AP) in a Wireless Local Area Network (WLAN) system, the method comprising:
receiving, from a second AP, a polling frame for checking whether to participate in a multi-AP operation;
based on the first AP being configured to maintain an awake state related to a power saving mode during a duration for the multi-AP operation, transmitting, to the second AP, a frame including information for indicating participation in the multi-AP operation, in response to the polling frame;
receiving, from the second AP, a control frame including information related to initiation of the multi-AP operation; and
performing frame exchange based on the multi-AP operation, based on the information.

2. The method of claim 1, wherein:
the duration for the multi-AP operation is included in a transmission opportunity (TXOP) acquired by the second AP.

3. The method of claim 2, wherein:
the first AP is configured to operate based on the power saving mode within the TXOP or within the duration for the multi-AP operation.

4. The method of claim 1, wherein:
information for the first AP related to the multi-AP operation is provided to the second AP in advance, and
the information for the first AP includes one or more of identification information, information related to a power saving operation, or information for a type of multi-AP operation that is supported.

5. The method of claim 1, wherein:
the control frame includes one or more of information for indicating a type of the multi-AP operation or information for resources for the multi-AP operation.

6. The method of claim 5, wherein:
based on a type of the multi-AP operation being indicated as coordinated-OFDMA (C-OFDMA), the control frame includes information for a resource unit to be used by the first AP in the multi-AP operation.

7. The method of claim 5, wherein:
based on a type of the multi-AP operation being indicated as coordinated-TDMA (C-TDMA), the control frame includes information for a transmission order of the first AP and an allocated duration in the multi-AP operation.

8. The method of claim 5, wherein:
based on a type of the multi-AP operation being indicated as coordinated-SR (C-SR), the control frame includes information for APs capable of simultaneous transmission on a same resource in the multi-AP operation.

9. The method of claim 1, wherein:
based on the first AP being configured to enter a doze state related to the power saving mode before the duration for the multi-AP operation, the first AP is configured not to transmit the response frame.

10. The method of claim 1,
further comprising performing pre-coordination for the multi-AP operation during a certain duration,
wherein the certain duration is set periodically or aperiodically.

11. The method of claim 10,
during a transmission opportunity (TXOP) that includes a duration for the multi-AP operation,
an AP that is to participate in the multi-AP operation through the pre-coordination is configured to maintain an awake state related to the power saving mode, and a remaining AP is configured to be in a doze state related to the power saving mode.

12. The method of claim 1, further comprising:
based on the first AP belonging to an AP multi-link device (AP MLD) for the multi-link operation,
transmitting, to a station (STA) belonging to a non-AP multi-link device (MLD) that is a target of the frame exchange, information indicating that the frame exchange based on the multi-AP operation is performed based on the multi-link operation.

13. An apparatus for a first access point (AP) in a wireless local area network (WLAN) system, the apparatus comprising:
at least one transceiver; and
at least one processor connected to the at least one transceiver,
wherein the at least one processor is configured to:
receive, from a second AP, a polling frame for checking whether to participate in a multi-AP operation;
based on the first AP being configured to maintain an awake state related to a power saving mode during a duration for the multi-AP operation, transmit, to the second AP, a frame including information for indicating participation in the multi-AP operation, in response to the polling frame,;
receive, from the second AP, a control frame including information related to initiation of the multi-AP operation; and
perform frame exchange based on the multi-AP operation, based on the information.

14. A method performed by a first Access Point (AP) in a Wireless Local Area Network (WLAN) system, the method comprising:
transmitting, to a second AP, a target wake time (TWT) request frame for requesting participation in a multi-AP operation;
receiving, from the second AP, a TWT response frame for indicating whether the requested participation is granted; and
based on the participation being granted and the first AP being configured to maintain an awake state related to a power saving mode during a TWT service period (SP), performing frame exchange based on the multi-AP operation during a TWT service period in which the multi-AP operation is to be performed.

15. The method of claim 14, wherein:
the frame exchange based on the multi-AP operation is initiated based on exchange of a trigger frame, a polling frame, and a response frame between the first AP and the second AP within the TWT SP.

16. The method of claim 14, further comprising performing pre-coordination for the multi-AP operation during a certain duration,
wherein the certain duration is set periodically or aperiodically.

17. The method of claim 16, wherein:
during a transmission opportunity (TXOP) that includes a duration for the multi-AP operation,
an AP that is to participate in the multi-AP operation through the pre-coordination is configured to maintain an awake state related to a power saving mode, and a remaining AP is configured to be in a doze state related to the power saving mode.

18. The method of claim 1, further comprising:
based on the first AP belonging to an AP multi-link device (AP MLD) for the multi-link operation,
transmitting, to a station (STA) belonging to a non-AP multi-link device (MLD) that is a target of the frame exchange, information indicating that the frame exchange based on the multi-AP operation is performed based on the multi-link operation.

19. An apparatus for a first access point (AP) in a wireless local area network (WLAN) system, the apparatus comprising:
at least one transceiver; and
at least one processor connected to the at least one transceiver,
wherein the at least one processor is configured to:
transmit, to a second AP, a target wake time (TWT) request frame for requesting participation in a multi-AP operation;
receive, from the second AP, a TWT response frame for indicating whether the requested participation is granted; and
based on the participation being granted and the first AP being configured to maintain an awake state related to a power saving mode during a TWT service period (SP), perform frame exchange based on the multi-AP operation during a TWT service period in which the multi-AP operation is to be performed.
